# EUROPÄISCHE PATENTANMELDUNG

(11) **EP 1 056 039 A2**
(43) Veröffentlichungstag der Anmeldung: **29.11.2000**
(21) Anmeldenummer: 00107808.8
(22) Anmeldetag: 12.04.2000
(51) Int. Cl.: G06K 19/07

(54) **Sende- und Empfangseinrichtung**

(30) Priorität: 22.05.1999 DE 19923634
(71) Anmelder: Mannesmann VDO Aktiengesellschaft, 60388 Frankfurt am Main (DE)
(72) Erfinder: Fleischhauer, Norbert, 65760 Eschborn (DE); Sievers, Christopher, 63450 Hanau (DE)
(74) Vertreter: Rassler, Andrea, Dipl.-Phys.

(57) **Zusammenfassung**

Bei einer Sende- und Empfangseinrichtung, insbesondere für Identifikationssysteme, ist in unmittelbarer Nachbarschaft mindestens einer Spule eine Baugruppe angeordnet, die mindestens eine Sende-Endstufe und einen Empfangs-Verstärker enthält.

## Beschreibung

Die Erfindung betrifft eine Sende- und Empfangseinrichtung, insbesondere für Identifikationssysteme.

Zur Identifikation von Berechtigten, beispielsweise zur Erkennung eines Autoschlüssels bei Wegfahrsperren oder einer als Chipkarte ausgebildeten tragbaren Identifikationseinrichtung, werden häufig Transponder verwendet, die in der Nähe der Sende- und Empfangseinrichtung ein von dieser abgestrahltes Wechselfeld empfangen, daraus eine Betriebsspannung für die im Transponder vorhandenen Schaltungen ableiten und ein Signal an die Sende- und Empfangseinrichtung zurücksenden.

Die Auswertung des von dem Transponder empfangenen Datenstroms erfolgt im allgemeinen in einer Steuereinrichtung, beispielsweise in einer sogenannten ECU (=Engine Control Unit) eines Kraftfahrzeugs. Dabei ist das Steuergerät durch eine längere Leitung mit der Sende- und Empfangsspule verbunden, was verschiedene Nachteile hat. Zum einen ist oft eine optimale Antennenanpassung problematisch. Zum anderen entstehen unerwünschte Abstrahlungen, die zur Verstimmung des Antennenkreises führen und damit den Wirkungsgrad verringern können.

Aufgabe der vorliegenden Erfindung ist es, eine Sende- und Empfangseinrichtung ohne diese Nachteile anzugeben. Diese Aufgabe wird erfindungsgemäß dadurch gelöst, daß in unmittelbarer Nachbarschaft mindestens einer Spule eine Baugruppe angeordnet ist, die mindestens eine Sende-Endstufe und einen Empfangs-Verstärker enthält.

Dabei ist vorzugsweise vorgesehen, daß eine bidirektionale Schnittstelle vorgesehen ist, welche empfangene Informationen als digitale Signale ableitet. Bei einschlägigen Identifikationssystemen ist häufig eine Informationsübertragung zum Transponder nicht erforderlich. In diesem Fall genügt es, wenn dann beispielsweise die direktionale Schnittstelle zur Zuführung von Impulsen zur Sende- und Empfangseinrichtung genutzt wird. Für den Fall, daß auch Informationen an den Transponder übertragen werden sollen, kann bei der erfindungsgemäßen Sende- und Empfangseinrichtung jedoch auch vorgesehen sein, daß die Schnittstelle ferner zum Zuführen von digitalen Signalen ausgebildet ist, die einen Modulator steuern, der mit einem Eingang der Sende-Endstufe verbunden ist.

Die erfindungsgemäße Sende- und Empfangseinrichtung hat den Vorteil, daß sie eine separat abgleichbare Funktionseinheit darstellt, die beispielsweise bei der Montage in einem Kraftfahrzeug ohne weiteres mit dem Steuergerät zusammengeschaltet werden kann. Eine Beeinträchtigung der Antenneneigenschaften durch die Kabelführung findet nicht statt. Die Ansteuerung der Sende- und Empfangseinrichtung über eine serielle Schnittstelle kommt der Struktur der Steuereinrichtung entgegen, wobei eine einfache Ankopplung der Steuereinrichtung zur Generierung und Auswertung des Datenstroms möglich ist. Wie bereits erwähnt, kann die Sende- und Empfangseinrichtung auch Informationen aussenden, die beispielsweise bei gleichzeitiger Verwendung mehrerer Transponder zur Adressierung jeweils eines Transponders dienen können. Zur Datenübertragung zwischen der Sende- und Empfangseinrichtung und dem Transponder sind verschiedene Modulationen geeignet, beispielsweise auch AM, FM oder PWM.

Die einzelnen Schaltungen innerhalb der Baugruppe, insbesondere Sende- und Empfangseinrichtungen, Modulator, Oszillator lassen sich leicht durch integrierte Schaltkreise, insbesondere als ASIC realisieren - ebenso wie der Abgleich der Antennenleistung und der Reichweite.

Die erfindungsgemäße Sende- und Empfangseinrichtung benötigt lediglich drei Anschlüsse, nämlich zwei für die Versorgung mit Batteriespannung und einen als bidirektionale Signalleitung.

Eine vorteilhafte Ausgestaltung der erfindungsgemäßen Sende- und Empfangseinrichtung besteht darin, daß die Baugruppe mit einer Stromversorgungsschaltung versehen ist, die durch zugeführte digitale Signale aktivierbar ist. Damit kann die Einrichtung unmittelbar an einen günstigen Punkt des Bordnetzes angeschlossen werden und ohne zusätzliche Schaltleitung von einem Stand-by-Betrieb in den Sende- und Empfangsbetrieb geschaltet werden.

Ferner kann gemäß einer anderen vorteilhaften Ausgestaltung die Sendeleistung durch zugeführte digitale Signale gesteuert werden.

Vorteilhaft ist ferner, wenn der Empfangs-Verstärker als Bandpaß ausgebildet ist, an den sich ein Komparator anschließt.

Ferner kann bei der erfindungsgemäßen Sende- und Empfangseinrichtung vorgesehen sein, daß die Spule die Form einer Rahmenantenne oder die Form einer Ferrit-Stabantenne aufweist.

Bei kleinen Rahmenantennen besteht das Problem, daß das Feld vorwiegend in senkrechter Richtung zur umschlossenen Fläche wirkt. Die Antennenanordnung kann jedoch aus konstruktiven Gründen häufig nur in einer vorgegebenen Ebene liegen. Um eine abweichende Ausrichtung zu erhalten, sind bei einer anderen Weiterbildung der Erfindung zwei Spulen vorgesehen, von denen die eine die Form einer Rahmenantenne und die andere die Form einer Ferrit-Stabantenne aufweist, wobei die von beiden Spulen induzierten Felder senkrecht aufeinanderstehen. Durch phasenrichtige Reihen- oder Parallelschaltung kann damit eine abweichende Ausrichtung geschaffen werden.

Eine Abstimmung der Resonanzfrequenz kann bei der erfindungsgemäßen Sende- und Empfangseinrichtung dadurch erfolgen, daß die mindestens eine Spule durch Reihenschaltung einer weiteren Spule mit einem verstellbaren Ferrit-Kern abgleichbar ist. Je nach Ausführungen im einzelnen ist damit bei der vorerwähnten Ausführungsform mit zwei Spulen eine Einstellung der Feldnichtung möglich.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer erfindungsgemäßen Sende- und Empfangseinrichtung,
- Fig. 2: ein erstes Ausführungsbeispiel,
- Fig. 3: ein zweites Ausführungsbeispiel,
- Fig. 4: eine Antenne mit zwei Spulen, deren Felder zueinander senkrecht stehen und
- Fig. 5: ein Zeitdiagramm von Impulsen, die von der Spule ausgesendet werden.

Gleiche Teile sind in den Figuren mit gleichen Bezugszeichen versehen. Im folgenden wird die Spule bzw. die Spulen zusammen mit einem Ferrit-Kern auch als Antenne bezeichnet, obwohl bei der üblichen Verwendung der erfindungsgemäßen Sende- und Empfangseinrichtung die Übertragung der Energie und der Informationen im Nahfeld erfolgt.

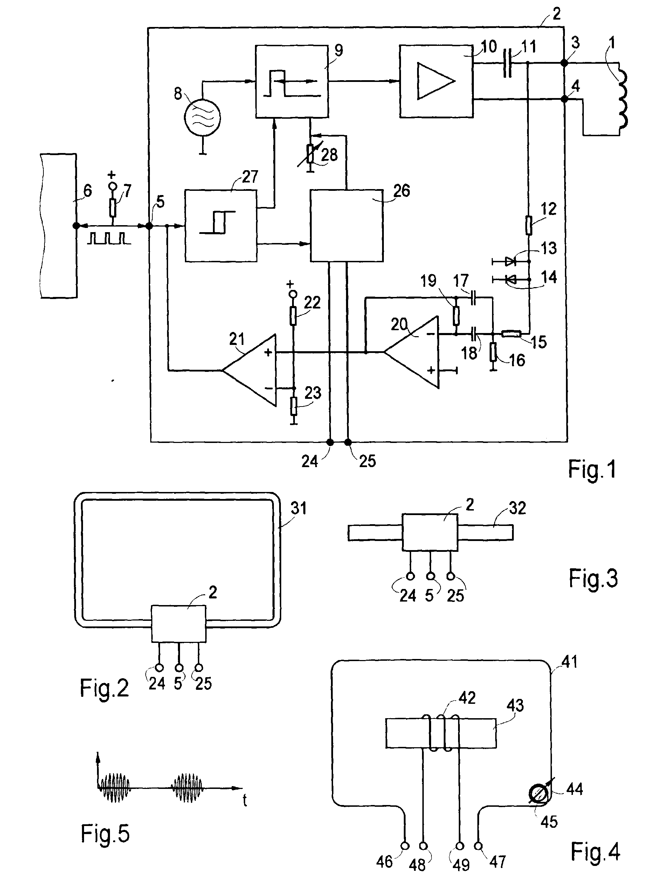

Die in Fig. 1 dargestellte erfindungsgemäße Sende- und Empfangseinrichtung besteht aus einer Spule 1 und einer Baugruppe 2, die über Anschlüsse 3, 4 miteinander verbunden sind. Über einen weiteren Anschluß 5 ist die Baugruppe 2 mit einem Steuergerät 6 verbindbar, wobei ein mit positiver Betriebsspannung verbundener Widerstand 7 als sogenannter Pull-up-Widerstand dient. Der Anschluß 5 stellt eine bidirektionale Schnittstelle dar.

Vom Steuergerät 6 werden Impulse zugeführt, die über einen Trigger 27 geleitet werden und bei 9 das Ausgangssignal eines Oszillators 8, beispielsweise eine Schwingung mit der Frequenz von 125 kHz, modulieren. Je nach Anwendungsfall im einzelnen kann die Modulation in einer Tastung bestehen, so daß ein in Fig. 5 dargestelltes Signal entsteht. Es können jedoch auch andere Modulationen, beispielsweise Pulsbreitenmodulation (PWM), angewendet werden. Das modulierte Signal wird über eine Sende-Endstufe 10 und einen Kondensator 11 der Spule 1 zugeführt. Dabei dient der Kondensator 11 als Resonanzkondensator. Der aus dem Kondensator 11 und der Spule 1 bestehende Schwingkreis hat eine relativ hohe Güte, was die Sende- und Empfangseigenschaften günstig beeinflußt.

Gerät ein in Fig. 1 nicht dargestellter Transponder in das Magnetfeld der Spule 1, wird in dessen Spule eine gemäß Fig. 5 pulsierende Wechselspannung erzeugt, die zum Betrieb der Schaltungen im Transponder gleichgerichtet wird und außerdem als Triggerimpuls für das Senden von Daten durch den Transponder dient. Diese Daten werden dann wieder mit der Spule 1 empfangen. Entsprechende Signale werden in einem aktiven Bandpaß 15 bis 20 selektiv verstärkt und in einem Komparator 21 bis 23 in Rechteckimpulse umgewandelt.

Vor dem Bandpaß ist eine aus einem Widerstand 12 und zwei antiparallelgeschalteten Dioden 13, 14 bestehende Begrenzerschaltung angeordnet, da der Bandpaß für relativ schwache Signale ausgelegt ist, die bei einem großen Abstand zwischen Spule 1 und Transponder empfangen werden, und da bei einem äußerst geringen Abstand durch die dann entstehenden hohen Amplituden des empfangenen Signals keine Übersteuerung des aktiven Bandpasses erfolgen soll.

Um die Leitungsführung innerhalb eines Kraftfahrzeugs zu vereinfachen, kann die Baugruppe 2 über Anschlüsse 24, 25 direkt mit dem Bordnetz verbunden werden. Damit dann jedoch bei ausgeschalteter Zündung kein unnötiger Stromverbrauch auftritt, ist eine Spannungsstabilisierungsschaltung 26 derart ausgelegt, daß bei Ausbleiben von Impulsen aus der Triggerschaltung 27 die Betriebsspannung der restlichen Schaltungen der Baugruppe 2 abgeschaltet wird. Mit dem ersten bei 5 zugeführten Impuls wird dann die Betriebsspannung wieder eingeschaltet.

Über ein Stellglied 28 kann der Modulator 9 dahingehend programmiert werden, daß er je nach Art der angeschlossenen Spule 1 der gewünschten Reichweite und sonstiger Umstände ein Signal optimaler Leistung erzeugt.

Bei dem in Fig. 2 dargestellten Ausführungsbeispiel ist die Spule 1 als Rahmenantenne 31 ausgebildet, die unmittelbar mit der Baugruppe 2 verbunden ist. Wie in Fig. 1 weist die Einrichtung lediglich drei Anschlüsse, nämlich zwei Anschlüsse 24, 25 für die Zuführung der Betriebsspannung und einen Anschluß 5 als bidirektionale Schnittstelle auf.

Bei dem Ausführungsbeispiel nach Fig. 3 ist anstelle der Rahmenantenne eine Ferrit-Antenne vorgesehen, von der in Fig. 3 lediglich der Ferrit-Stab 32 dargestellt ist.

Fig. 4 zeigt eine Spulenanordnung mit einer rahmenartigen Spule 41 und einer Spule 42 mit einem Ferrit-Kern 43. Die Spulen 41, 42 sind in Fig. 4 lediglich mit einer Windung bzw. mit drei Windungen dargestellt. Bei der Realisierung der Erfindung ist der Fachmann in der Lage, eine an die Erfordernisse im einzelnen angepaßte Windungszahl zu wählen - beispielsweise 20 für die Spule 41. Die von diesen Spulen erzeugten Felder stehen senkrecht zueinander, so daß das überlagerte Feld je nach Betrag und Phasenlage der Ströme durch die Spulen 41, 42 gegenüber der zur Ebene der Spule 41 senkrechten Richtung ausgelenkt werden kann. Die Anschlüsse 46, 47 der Spule 41 und die Anschlüsse 48, 49 der Spule 42 können gegebenenfalls über ein passives Netzwerk mit einer Sende-Endstufe 10 verbunden werden. Es können jedoch auch für die Spulen zwei getrennte Sende-Endstufen vorgesehen sein.

Die Spule 41 weist eine weitere wesentlich kleinere Spule 44 mit mindestens einer Windung auf, die mit einem Ferrit-Kern 45 versehen ist. Dieser ist schraubbar, so daß damit die Gesamtinduktivität der Spule 41 und der Spule 44 justiert werden kann.

Bei Identifikationssystemen mit größerer Reichweite wird häufig der bewegliche Teil (Schlüssel, Chipkarte) mit einer eigenen Batterie versehen. Für den Fall, daß die Batterie entladen ist, kann zusätzlich ein Transponder eingebaut sein, der die erforderliche Betriebsenergie aus der Sende- und Empfangseinrichtung bezieht. Bei solchen Identifikationssystemen kann der Benutzer bei entladener Batterie den Transponder in die Nähe der Spule 44 und des Ferrit-Kerns 45 bringen, worauf eine Identifikation auch ohne geladene Batterie möglich wird - beispielsweise das Öffnen der Autotür und das Einschalten der Zündung.

## Patentansprüche

1. Sende- und Empfangseinrichtung, insbesondere für Identifikationssysteme, **dadurch gekennzeichnet**, daß in unmittelbarer Nachbarschaft mindestens einer Spule (1) eine Baugruppe (2) angeordnet ist, die mindestens eine Sende-Endstufe (10) und einen Empfangs-Verstärker (20) enthält.

2. Sende- und Empfangseinrichtung nach Anspruch 1, **dadurch gekennzeichnet**, daß eine bidirektionale Schnittstelle (5) vorgesehen ist, welche empfangene Informationen als digitale Signale ableitet.

3. Sende- und Empfangseinrichtung nach Anspruch 2, **dadurch gekennzeichnet**, daß die Schnittstelle (5) ferner zum Zuführen von digitalen Signalen ausgebildet ist, die einen Modulator (9) steuern, der mit einem Eingang der Sende-Endstufe (10) verbunden ist.

4. Sende- und Empfangseinrichtung nach einem der vorhergehenden Ansprüche, **dadurch gekennzeichnet**, daß die Baugruppe (2) mit einer Stromversorgungsschaltung (26) versehen ist, die durch zugeführte digitale Signale aktivierbar ist.

5. Sende- und Empfangseinrichtung nach einem der Ansprüche 2 bis 4, **dadurch gekennzeichnet**, daß die Sendeleistung durch zugeführte digitale Signale steuerbar ist.

6. Sende- und Empfangseinrichtung nach einem der vorhergehenden Ansprüche, **dadurch gekennzeichnet**, daß der Empfangs-Verstärker (20) als Bandpaß ausgebildet ist, an den sich ein Komparator (21) anschließt.

7. Sende- und Empfangseinrichtung nach einem der vorhergehenden Ansprüche, **dadurch gekennzeichnet**, daß die Spule (1) die Form einer Rahmenantenne (31) aufweist.

8. Sende- und Empfangseinrichtung nach einem der Ansprüche 1 bis 6, **dadurch gekennzeichnet**, daß die Spule die Form einer Ferrit-Stabantenne (32) aufweist.

9. Sende- und Empfangseinrichtung nach einem der Ansprüche 1 bis 6, **dadurch gekennzeichnet**, daß zwei Spulen vorgesehen sind, von denen die eine die Form einer Rahmenantenne (41) und die andere die Form einer Ferrit-Stabantenne (42, 43) aufweist, wobei die von beiden Spulen induzierten Felder senkrecht aufeinanderstehen.

10. Sende- und Empfangseinrichtung nach einem der Ansprüche 7 bis 9, **dadurch gekennzeichnet**, daß die mindestens eine Spule (41) durch Reihenschaltung einer weiteren Spule (44) mit einem verstellbaren Ferrit-Kern (45) abgleichbar ist.
